## Europäisches Patentamt
## European Patent Office
## Office européen des brevets

(19)

(11) Veröffentlichungsnummer : **0 166 094 B1**

(12) **EUROPÄISCHE PATENTSCHRIFT**

(45) Veröffentlichungstag der Patentschrift :
09.11.88

(21) Anmeldenummer : 85104128.5

(22) Anmeldetag : 04.04.85

(51) Int. Cl.⁴ : **F 26 B 3/04, C 04 B 11/032, B 28 B 1/52**

(54) Verfahren und Anlage zur Herstellung von Gipsfaserplatten.

(30) Priorität : 25.05.84 DE 3419558

(43) Veröffentlichungstag der Anmeldung :
02.01.86 Patentblatt 86/01

(45) Bekanntmachung des Hinweises auf die Patenterteilung : 09.11.88 Patentblatt 88/45

(84) Benannte Vertragsstaaten :
AT BE CH DE FR GB IT LI LU NL SE

(56) Entgegenhaltungen :
AT-B-   323 073
DE-A- 2 649 300
DE-A- 2 816 466
DE-A- 3 117 662
DE-B- 1 061 676
DE-C- 1 014 019

(73) Patentinhaber : BABCOCK-BSH AKTIENGESELLS-
CHAFT vormals Büttner-Schilde-Haas AG
Parkstrasse 29 Postfach 4 und 6
D-4150 Krefeld 11 (DE)

(72) Erfinder : Eberhardt, Kurt
Vitalisstrasse 11
D-6430 Bad Hersfeld (DE)
Erfinder : Blackert, Heinrich
Frankfurter Strasse 2
D-6440 Bebra (DE)
Erfinder : Forbert, Gerald
Stresemannalee 7
D-6430 Bad Hersfeld (DE)
Erfinder : Steinkuhl, Josef
Am Hopfengarten 10
D-6430 Bad Hersfeld (DE)
Erfinder : Hose, Horst, Dr.
Umbachweg 43
D-3500 Kassel (DE)
Erfinder : Bahner, Friedrich
Grünberg Strasse 14a
D-6442 Rotenburg a.d.F. (DE)

(74) Vertreter : Planker, Karl-Josef, Dipl.-Phys.
c/o BABCOCK-BSH AKTIENGESELLSCHAFT Parkstrasse 29 Postfach 4 + 6
D-4150 Krefeld 11 (DE)

**Beschreibung**

Die Erfindung betrifft ein Verfahren gemäß dem Oberbegriff des Patentanspruchs 1 und eine zur Durchführung dieses Verfahrens geeignete Anlage gemäß dem Oberbegriff der Patentansprüche 11 und 16.

Es sind Verfahren zur Herstellung von Gipsfaserplatten bekannt, bei denen Calciumsulfathalbhydrat, Fasermaterial und gegebenenfalls weitere Additive zu einer Naßmasse verrührt werden, aus der anschließend die Platten geformt werden. Die Verfestigung der Platten erfolgt durch Abbinden des Halbhydrates zu Calciumsulfatdihydrat (DE-B-2 918 974). Bei diesen Verfahren ist nachteilig, daß die Verarbeitung innerhalb der kurzen Abbindezeit des Halbhydrates durchgeführt werden muß. Weiterhin ist die Wiederverwertung von überschüssigem Material, z. B. aus dem Plattenzuschnitt, nur unter großem Aufwand möglich.

Gegenüber derartigen herkömmlichen Verfahren besteht das hervorstechende Merkmal des aus der DE-A-2 816 466 bekannten gattungsbildenden Verfahrens darin, daß als Calciumsulfat nicht das Halbhydrat, sondern das Dihydrat eingesetzt wird. Das geformte Bauteil wird unter Sattdampf erhitzt, bis das Calciumsulfatdihydrat in eine wasserärmere Form des Calciumsulfats übergegangen ist. Nach dem Erhitzen wird der Formkörper unter Druck in dem Druckraum auf eine Temperatur von 100-80 °C gekühlt und schließlich unter äußeren Bedingungen, die eine möglichst weitgehende Rehydratisierung des wasserärmeren Calciumsulfats zu Calciumsulfatdihydrat bewirken, ausgesetzt und anschließend getrocknet.

Die DE-A-2 649 300 betrifft ebenfalls ein Verfahren zur Herstellung von Gipsfaserplatten auf der Basis von Calciumsulfatdihydrat. Hierbei werden aus einer faserhaltigen Gipsmaische geformte Platten bei Temperaturen von 95-140 °C getrocknet. Eine Umkristallisation des Gipses erfolgt nicht.

Die DE-A-3 117 662 betrifft ein Verfahren zur Herstellung von Formsteinen, insbesondere zur Verpressung und Kalzinierung von Bindemitteln mit gegebenenfalls Sand und/oder anderen Zuschlagstoffen, bei dem eine Calciumsulfatdihydratrohmasse in feuchtem Zustand zu Formkörpern verpreßt wird. Die Formkörper werden in einem Autoklav hydrothermal bei einer Temperatur bis zu 473 K behandelt, anschließend aus dem Autoklav ausgefahren und abgekühlt.

Die AT-B-323 073 befaßt sich mit der Trocknung von feuchtigkeitshaltigen Gegenständen, insbesondere Gegenformen oder -blöcken aus Gips. Sie geht von der Erkenntnis aus, daß sich bei anderen Trocknungsverfahren die erforderliche absolute Trockenheit nicht erreichen läßt, weil die äußere Oberfläche relativ schnell trocknet, so daß das zurückbleibende Wasser im Innern des Blockes bei späterer Verdampfung die Oberfläche aufreißt und Maßänderungen verursacht. Zur Behebung dieses Problems werden die Gegenstände zunächst in einem Kessel mit Wasserdampf beheizt. Bei einem Druck von 3 atü beträgt die Temperatur des Dampfes etwa 210 °C; sie liegt also erheblich über der aus der Dampfdruckkurve hervorgehenden Sattdampftemperatur. Wenn die Gegenstände im Innern die gleiche Temperatur erreicht haben wie an der Oberfläche, wird bei sinkender Temperatur der Dampf langsam abgelassen. Danach folgt eine Lufttrocknung unter erhöhter Temperatur, und schließlich werden die Gegenstände nach Abkühlung auf 100-80 °C aus dem Kessel entladen. Die Trocknung nimmt insgesamt mehr als 15 Stunden in Anspruch.

Die Erfinder haben sich die Aufgabe gestellt, bei dem Verfahren gemäß dem einleitenden Teil des Anspruchs 1 die Abkühlung der Platten möglichst rasch durchzuführen.

Diese Aufgabe wird gemäß dem ersten im Kennzeichen des Anspruchs 1 angegebenen Merkmal dadurch gelöst, daß man zum Abkühlen der Platten den Druck im Druckbehälter durch Ablassen von Wasserdampf absenkt.

Der Dampfdruck des Wassers, das in den Poren der noch heißen Platte eingeschlossen ist, liegt dann höher als der jeweils in der Atmosphäre des Druckbehälters herrschende Druck. Daher verdampft das in den Poren eingeschlossene Wasser. Infolge der Verdampfung kühlen die Platten rasch ab (Verdunstungskühlung).

Hierbei tritt aber ein unerwünschter Nebeneffekt auf : Der aus der Platte entweichende Dampf kann bewirken, daß die Platte aufgebläht wird und daß sogar die Plattenoberfläche abgesprengt wird. Diese Gefahr ist bei dem gattungsgemäßen Verfahren besonders groß, da im Stadium der Abkühlung der Zusammenhalt der Platte noch sehr schwach ist. Die Rekristallisation des bei der Wärmebehandlung gebildeten Halbhydrats zu Dihydrat, d. h. das Zusammenwachsen zu einem festen Gefüge, beginnt ja erst, nachdem die Platte unter etwa 100 °C abgekühlt ist. Während der Abkühlung besteht der Gipsanteil praktisch aus Halbhydratkörnern, die mit dem Wasser und den Fasern einen lockeren Verbund bilden.

Es gehört daher zur gestellten Aufgabe, die schädliche Aufblähung der Platte beim Abkühlen zu vermeiden.

Diese Teilaufgabe wird gemäß dem zweiten im Kennzeichen des Anspruchs 1 angegebenen Merkmal dadurch gelöst, daß die Platten beim Abkühlen zwischen Formelementen fest eingespannt sind.

Durch die Maßnahme des Anspruchs 2, die insbesondere für dickere Platten empfohlen wird, läßt sich die Gefahr, daß beim Abkühlen die Plattenoberfläche beschädigt wird, weiter verringern.

Die Maßnahme gemäß Anspruch 3 beschleunigt den Abbindevorgang.

Durch die Maßnahme gemäß Anspruch 4 lassen sich große Produktionsgeschwindigkeiten bei verringertem energetischem Aufwand erzielen.

Die Maßnahme gemäß Anspruch 5 ermöglicht kürzere Abbindezeiten, ohne daß das Fasermaterial negativ beeinflußt wird.

Mit den Maßnahmen der Ansprüche 6 bis 9 lassen sich die Platten kostengünstig formen und entwässern, ohne daß die Festigkeit der abgebundenen Platten wesentlich beeinträchtigt wird.

Durch die Maßnahme des Anspruchs 10 wird eine hohe Umsetzungsgeschwindigkeit zu α-Halbhydrat erreicht.

Eine zweite Aufgabe, die der Erfindung zugrundeliegt, besteht darin, eine Anlage zur Durchführung des Verfahrens gemäß der Erfindung zu schaffen.

Diese Aufgabe wird durch die Merkmale des Anspruchs 11 gelöst.

Das Merkmal des Anspruchs 12 sichert schnellen Wärmeübergang trotz der festen Einspannung.

Die Ansprüche 13 bis 15 betreffen Ausgestaltungen der Anlage für die maschinelle Produktion.

Eine andere Lösung der zweiten Aufgabe ist in Anspruch 16 angegeben.

Die Ansprüche 17 und 18 betreffen Ausgestaltungen der Anlage gemäß Anspruch 16.

Die Zeichnungen dienen zur Erläuterung der Erfindung anhand vereinfacht dargestellter Ausführungsbeispiele.

Figur 1 zeigt grobschematisch eine Anlage zur Herstellung von Gipsfaserplatten aus Rauchgasentschwefelungsgips und Altpapier mit drei parallelgeschalteten Druckbehältern.

Figur 2 zeigt grobschematisch eine Anlage, bei der ein Druckbehälter mit drei Abteilungen chargenweise beschickt wird.

Figur 3 zeigt eine entsprechende Anlage, bei der die Platten den Druckbehälter kontinuierlich durchlaufen.

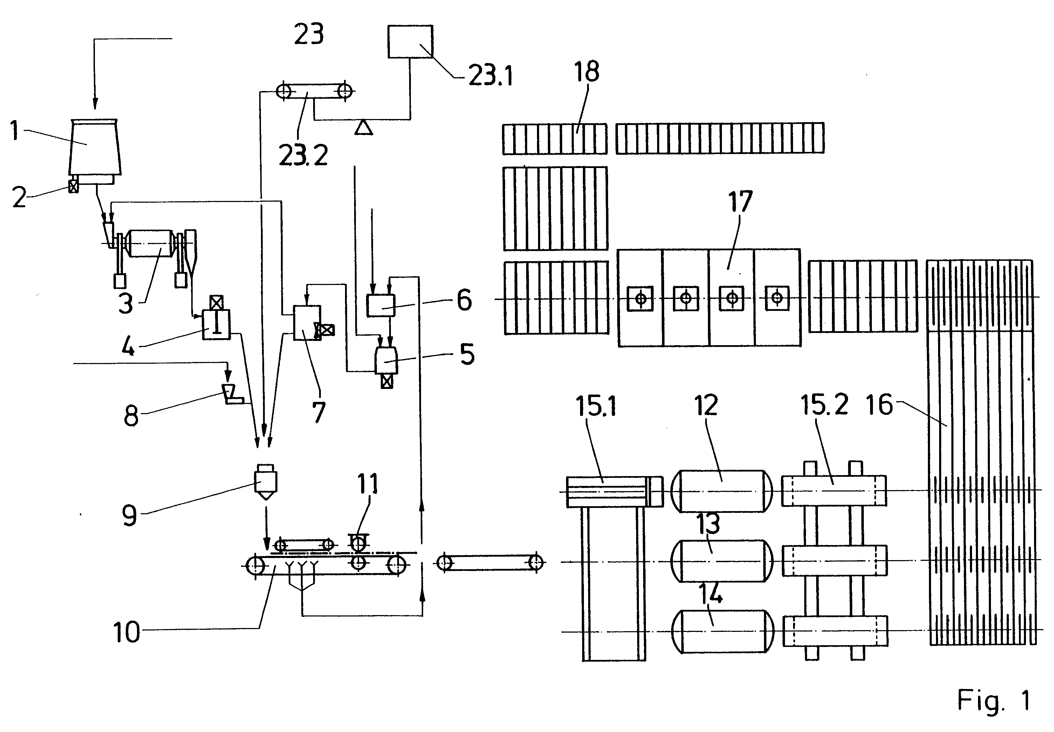

Eine erfindungsgemäße Anlage besteht aus einer Gipsaufbereitung mit einem Rohgipssilo 1 mit Gipsaustrag 2, einer Gipsmühle 3 — im vorliegenden Beispiel eine Rohrmühle — und einem Gipsbehälter 4 mit Rührer, der als Zwischenbehälter dient. Im vorliegenden Beispiel wird das Fasermaterial aus Altpapier hergestellt, ebenso ist die Verwendung von Glasfasern, Fasern aus Holzresten, Gräsern etc. möglich. Vorzugsweise werden Fasern verwendet, die wasseraufnahmefähig, zumindest gut benetzbar sind. Zur Papieraufbereitung dient ein Behälter 5 mit Rührer, an den eine Wasserversorgung 6 angeschlossen ist, und ein Pülpenbehälter 7, von dem eine Wasserleitung zur Rohrmühle 3 zurückführt. Gipsbehälter 4 und Pülpenbehälter 7 sind zusammen mit einem Additivdosierer 8 an einem Mischer 9 angeschlossen, von dem eine Form- und Entwässerungsstation beschickt wird. In der Anlage gemäß Figur 1 endet im Mischer 9 zusätzlich eine Versorgungsleitung aus einer Gipsstation 23 mit einem Silo 23.1 und Dosiereinrichtung 23.2 für Gips, der ungemahlen zugemischt wird.

Die Form- und Entwässerungsstation besteht aus einem Saugbandfilter 10 mit einem nachgeschalteten Walzgerüst mit Preßwalzen 11. Gegebenenfalls sind in die Form- und Entwässerungsstation Formeinrichtungen zur Herstellung nicht planer Platten, z. B. Wellplatten, integriert. Den Abschluß der Form- und Entwässerungsstation 10, 11 bildet ein Klipper, mit dem die Platten zurechtgeschnitten werden.

In einer Anlage gemäß Figur 1 folgen im Anschluß an die Form- und Entwässerungsstation 10, 11 drei parallelgeschaltete Druckbehälter 12, 13, 14 mit einer Vorrichtung 15.1 zum wechselseitigen Beschicken. In jedem Druckbehälter 12 bis 14 steht ein Stapelgerüst mit waagrechten, vertikal verschiebbaren Zwischenplatten, die so bemessen sind, daß sie die Gipsfaserplatten vollständig abdecken. Sie bestehen aus Doppelstahlplatten, die über ein dampfdurchlässiges Gerüst in geringem Abstand fest miteinander verbunden sind. Bei der Herstellung nicht planer Platten werden als Zwischenplatten entsprechende Formbleche eingesetzt.

Zusätzlich weist jeder Druckbehälter 12 bis 14 eine Heißdampfzu- und -ableitung und Umwälzventilatoren auf, und alle Druckbehälter 12 bis 14 sind über Dampfleitungen miteinander verbunden. Jeder Druckbehälter 12 bis 14 ist über eine Entleerungsvorrichtung 15.2 an einen Rollengang 16 angeschlossen, der zu einem Trockner 17 führt. Im Anschluß an den Trockner 17 folgen weitere Rollengänge 18 zu einem Stapellager.

Bei der Herstellung von Gipsfaserplatten in einer Anlage gemäß Figur 1 werden ca. 30 % des Rohgipses — hier Gips aus einer Rauchgasentschwefelungsanlage — in der Rohrmühle 3 unter Zugabe von Wasser auf eine Korngröße von ca. 3000 Blaine gemahlen. Die Suspension mit etwa 50 Gew.-% Wasser wird im Behälter 4 unter Rühren zwischengelagert, von dort wird der Mischer 9 kontinuierlich beschickt. Die restliche benötigte Rohgipsmenge wird unvermahlen mit einer Blaine-Zahl von etwa 1 700 aus der Gipsstation 23 dem Mischer 9 direkt zugeführt. Ebenfalls wird dort Pülpe aus dem Pülpenbehälter 7 zugemischt. Die Pülpe wurde aus Altpapier und Wasser im Papieraufbereiter 5 hergestellt und durch Absetzen im Pülpenbehälter 7 eingedickt, das überschüssige Wasser wird in die Rohrmühle 3 geführt. Im Mischer 9 erfolgt auch die Zudosierung eines Additivs, im vorliegenden Beispiel Aluminiumsulfat, die Zudosierung von Kalium- oder Eisensulfat oder einer Mineralsäure (z. B. $H_2SO_4$) ist ebenfalls möglich.

Das Aluminiumsulfat dient sowohl als Flockungsmittel zur Verbesserung der Entwässerbarkeit des Gips-Fasergemisches, als auch als Abbindebeschleuniger für das später gebildete Halbhydrat. Die Dosierung wird so geregelt, daß das Gips-Fasergemisch beim Eintritt in die Druckbehälter 12 bis 14 einen pH-Wert kleiner oder gleich 7, vorzugsweise zwischen pH = 4 und pH = 5 hat. Je nach Rohstoff und geforderter Abbindezeit beträgt die Additivzugabe zwischen 0,1 und 2 Gew.-%.

Der Wassergehalt der Pülpe und der Gipssuspension wird derart eingestellt, daß im Mischer 9 eine Maische mit einem Wasser/Feststoff-Verhältnis von etwa 3,4 entsteht. Dabei beträgt das Verhältnis zwischen Gips und Fasermaterial etwa 10 : 1. Diese Maische wird anschließend in zwei Stufen zu Platten geformt und gleichzeitig entwässert. Die Plattendicke beträgt zwischen 10 und 40 mm. In der ersten Stufe wird mit einer Saugentwässerung auf ein Wasser/Feststoff-Verhältnis von ca. 0,7 vorentwässert, gleichzeitig wird ein Kuchen geformt. Dieser Kuchen wird anschließend in der zweiten Stufe durch eine Druckentwässerung mit den Druckwalzen 11 des Walzgerüstes auf ein Wasser/Feststoff-Verhältnis kleiner als 0,4, vorzugsweise ca. 0,35 weiter entwässert. Dieser Entwässerungsgrad ist erfahrungsgemäß nur durch eine Zugabe von Flockungsmitteln — hier Aluminiumsulfat — erreichbar. Eine mehrstufige Druckentwässerung ohne vorgeschaltete Saugentwässerung ist ebenfalls möglich.

Der kontinuierlich geformte Kuchen wird in Platten geschnitten, die anschließend im Verfahren nach Figur 1 abwechselnd den Druckbehältern 12 bis 14 zugeführt werden. In den Druckbehältern 12 bis 14 werden sie, jeweils zwischen zwei Zwischenplatten fest eingespannt, übereinander gestapelt. Die Aufheizung erfolgt erst mit rückgeführtem Dampf aus einem zu kühlenden Druckbehälter, anschließend mit Sattdampf von ca. 6 bar bis zu einer Temperatur von ca. 140 °C. Dabei steigt der Druck auf etwa mehr als 3,5 bar an. Da der Dampf umgewälzt wird und zwischen die Doppelplatten eindringt, ist eine gleichmäßige Erwärmung — und Abkühlung — der Platten gewährleistet. Zum Abkühlen wird Dampf abgelassen, wobei die Druckabsenkung weniger als 1 bar pro Minute beträgt, um Beschädigungen der Platten zu vermeiden. Der abgelassene Dampf wird zum Vorheizen eines frisch beschickten Druckbehälters verwendet.

Die drei Druckbehälter 12 bis 14 arbeiten wechselweise : während einer, z. B. Druckbehälter 12, entleert und neu beschickt wird, erfolgt im zweiten, z. B. Druckbehälter 13, die Aufheizung und im dritten, z. B. Druckbehälter 14, wird durch Entspannen abgekühlt. In der ersten Phase des Aufheizens bzw. Abkühlens wird die Verbindungsleitung zwischen den entsprechenden Druckbehältern (im Beispiel : Druckbehälter 13 und 14) geöffnet, so daß Dampf überströmt, bis der Druck sich ausgeglichen hat. Beim nächsten Arbeitstakt wird dann der Druckbehälter 12 aufgeheizt, der Druckbehälter 13 entspannt und der Druckbehälter 14 entleert und neu beschickt, usw.

Beim Aufheizen in gesättigter Wasserdampfatmosphäre auf ca. 140 °C wandelt sich das Calciumsulfat-Dihydrat in Alpha-Halbhydrat um. Die Aufheizzeiten betragen je nach Plattendicke zwischen 3 und 50 Minuten. Durch die anschließende Entspannung auf 1 bar sinkt die Temperatur auf ca. 100 °C ab und das Halbhydrat rehydratisiert wieder zu Dihydrat ; die Platte verfestigt sich. Die Rehydratisierung erfolgt überwiegend mit abgespaltenem, in der Platte verbliebenem Kristallwasser, daher ist während der gesamten Behandlungszeit im Druckbehälter eine gesättigte Wasserdampfatmosphäre erforderlich, um ein Austrocknen der Platten von innen vor Abschluß der Rehydration zu verhindern. Durch langsame Druckabsenkung von weniger als 1 bar pro Minute wird in Verbindung mit dem Einspannen der Platten ein Platzen infolge des Druckgefälles vermieden. Diese Gefahr besteht insbesondere bei dicken Platten, z. B. 40 mm Platten.

Es ist möglich, die Rehydrationszeit zu beschleunigen, ohne daß eine zu große Druckdifferenz zu Beschädigungen führt, indem man während der Entspannung die Platten an ihrer Oberfläche kühlt, während gleichzeitig ein erhöhter Dampfdruck im Druckbehälter 12 bis 14 aufrecht gehalten wird. Die Kühlung kann z. B. über Formelemente mit einer zusätzlichen Kühlmittelzuführung durchgeführt werden.

Im Anschluß an die Behandlung in den Druckbehältern 12 bis 14 werden die Platten über den Rollengang 16 in den Trockner 17 befördert, wo sie auf ca. 4 bis 5 % Restfeuchte getrocknet werden, bevor sie über die Rollengänge 18 dem Stapellager zugeführt werden.

Bei Verwendung von gut entwässerbarem Ausgangsmaterial — die Entwässerbarkeit wird von der Kornverteilung des Gipses und dem verwendeten Fasermaterial beeinflußt — läßt sich der Energieverbrauch optimal minimieren, wenn die Platten vor Eintritt in die Druckbehälter 12 bis 14 auf ca. 10 bis 15 Gew.-% vorentwässert werden. In diesem Fall ergibt sich durch die Wasserverluste beim Entspannen (ca. 5 %) und durch Verdunsten infolge der Eigenwärme nach Verlassen der Druckbehälter 12 bis 14 eine quasi trockene Platte, die nicht zusätzlich getrocknet werden braucht. Dies ist jedoch nur durch erheblichen Mehraufwand bei der Gipsaufbereitung und der Entwässerung zu erreichen, wobei gleichzeitig Beeinträchtigungen der Umsatzgeschwindigkeit in Kauf genommen werden müssen.

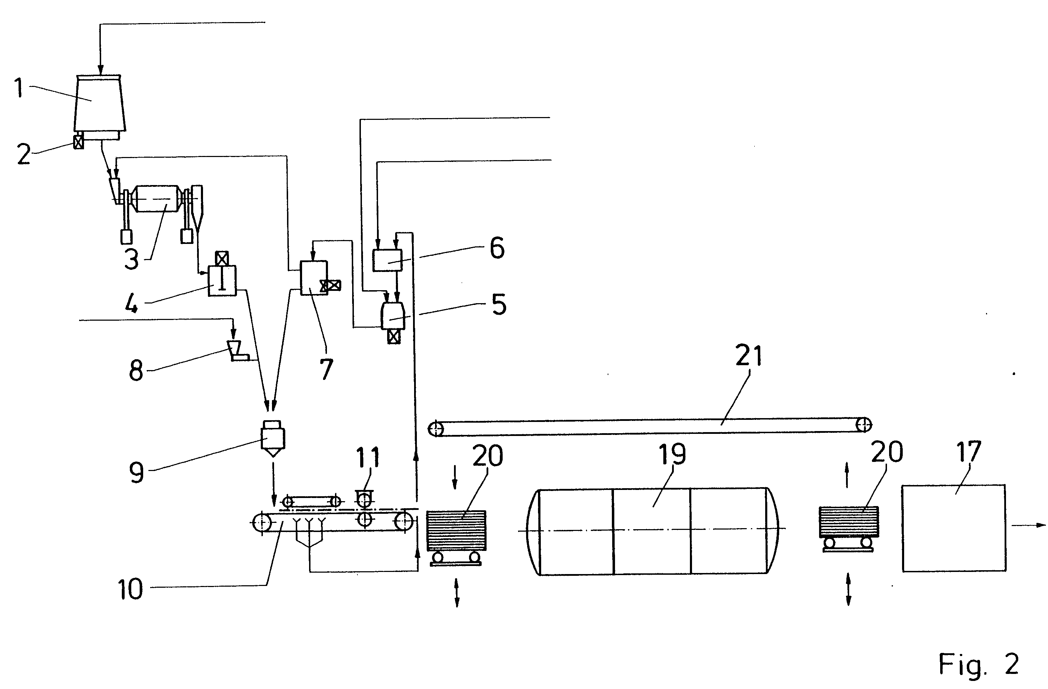

Die Anlage gemäß Figur 2 enthält einen dreigeteilten Druckbehälter 19, dessen drei Abteilungen hintereinander angeordnet und gegeneinander abgedichtet sind. Die beiden ersten Abteilungen sind jeweils mit einer Heizung versehen, die letzte Abteilung weist eine Einrichtung zum Ablassen von Wasserdampf auf und ist über eine Dampfleitung mit der ersten Abteilung verbunden. Die geformten Platten durchlaufen den Druckbehälter 19 auf Stapelwagen 20, wobei sie durch Zwischenplatten auf Abstand gehalten werden. Die Zwischenplatten werden von einem Förderband 21 zum Eingang des Druckbehälters 19 zurücktransportiert. Die Gipsfaserplatten werden in der ersten Abteilung durch Dampf aus der dritten Abteilung vorerwärmt, in der zweiten Abteilung auf die Endtemperatur gebracht und in der dritten Abteilung wieder abgekühlt, entsprechend dem vorhin beschriebenen Verfahren.

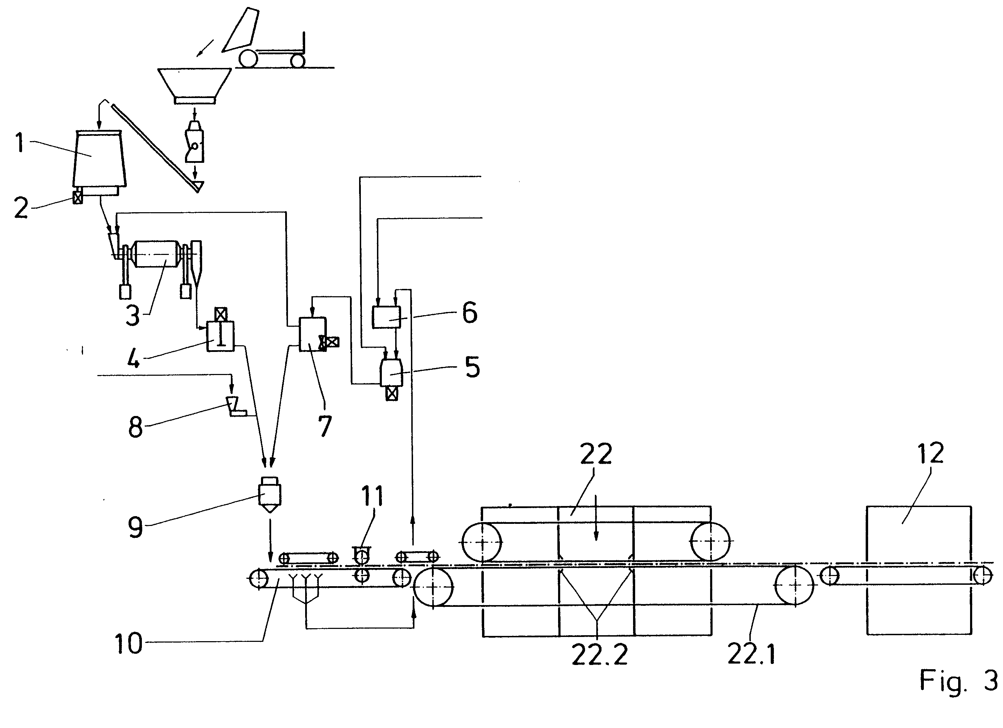

Bei einer kontinuierlichen Anlage nach Figur 3 ist in einem dreigeteilten Druckbehälter 22 ein Bandförderer 22.1 eingebaut, der am Eingang, Ausgang und an den Übergängen zwischen den Abteilungen mit Dichtlippen 22.2 abgedichtet ist. Bei dieser Ausführungsform des Druckbehälters 22 wird der erforderliche Druck beim Abkühlen auf die Platten in der letzten Abteilung durch die beiden Trums des Bandförderers 22.1 aufgebracht.

**Patentansprüche**

1. Verfahren zur Herstellung von Gipsfaserplatten, bei dem die Platten aus einer Maische mit Kalziumsulfat-Dihydrat und Fasermaterial unter Zusatz von Additiven geformt werden und die geformten Platten in einem Druckbehälter (12-14, 19, 22) bei gesättigter Wasserdampfatmosphäre auf 120-160 °C, vorzugsweise zwischen 135-145 °C, erhitzt und auf ungefähr 100 °C oder darunter wieder abgekühlt werden, dadurch gekennzeichnet, daß man zum Abkühlen der Platten den Druck im Druckbehälter (12-14, 19, 22) durch Ablassen von Wasserdampf absenkt und daß die Platten beim Atkühlen zwischen Formelementen fest eingespannt sind.

2. Verfahren nach Anspruch 1, dadurch gekennzeichnet, daß die Druckabsenkung mit weniger als 1 bar pro Minute durchgeführt wird.

3. Verfahren nach Anspruch 1 oder 2, dadurch gekennzeichnet, daß die Oberflächen der Platten während der Druckabsenkung gekühlt werden.

4. Verfahren nach einem der Ansprüche 1 bis 3, dadurch gekennzeichnet, daß mindestens zwei Druckbehälter (12-14) wechselweise beschickt werden, wobei der zum Kühlen abgelassene Dampf eines Druckbehälters (12-14) dem nachfolgend beschickten Druckbehälter (12-14) zugeführt wird.

5. Verfahren nach einem der Ansprüche 1-4, dadurch gekennzeichnet, daß die geformten Platten auf einen pH-Wert kleiner/gleich 7, vorzugsweise zwischen pH = 4 und pH = 5, eingestellt werden.

6. Verfahren nach einem der Ansprüche 1 bis 5, gekennzeichnet durch die Verwendung von Kalziumsulfat-Dihydrat mit einer Blainezahl zwischen 1 000 und 3 500.

7. Verfahren nach Anspruch 6, dadurch gekennzeichnet, daß mindestens 40 %, vorzugsweise mehr als 70 %, des Kalziumsulfat-Dihydrats eine Blainezahl kleiner als 2 000 aufweist.

8. Verfahren nach einem der Ansprüche 1 bis 7, dadurch gekennzeichnet, daß aus der Maische durch Saugentwässerung ein Kuchen geformt wird, der anschließend einer Druckentwässerung unterzogen wird.

9. Verfahren nach einem der Ansprüche 1 bis 7, dadurch gekennzeichnet, daß aus der Maische unter Druck ein Kuchen geformt wird, der anschließend in mehreren Stufen weiter druckentwässert wird.

10. Verfahren nach Anspruch 8 oder 9, dadurch gekennzeichnet, daß die geformten Platten vor dem Erwärmen eine Feuchte von weniger als 40 Gew.-%, vorzugsweise ca. 35 Gew.-% aufweisen.

11. Anlage zur Durchführung des Verfahrens nach einem der Ansprüche 1 bis 10, mit Vorrichtungen zum Herstellen einer Maische aus Wasser, Kalziumsulfat-Dihydrat und Fasermaterial, mit einer Form- und Entwässerungsvorrichtung (10, 11) und mit einem Druckbehälter (12-14, 19) mit Dampfzuführung, gekennzeichnet durch ein Stapelgestell mit waagerechten, inelastischen und vertikal beweglichen Zwischenplatten und mit Mitteln zum Fixieren der vertikalen Position der Zwischenplatten.

12. Anlage nach Anspruch 11, gekennzeichnet durch Zwischenplatten in Form von Doppelplatten, die mit einem dampfdurchlässigen Gerüst in Abstand miteinander fest verbunden sind.

13. Anlage nach Anspruch 11 oder 12, gekennzeichnet durch drei parallelgeschaltete Druckbehälter (12-14), die durch Dampfleitungen miteinander verbunden sind.

14. Anlage nach einem der Ansprüche 11 bis 13, gekennzeichnet durch einen Druckbehälter (19) mit drei aufeinanderfolgenden, gegeneinander abdichtbaren Abteilungen, wobei die erste und zweite Abteilung mit einer Heizung versehen sind und die letzte Abteilung einen Dampfablaß aufweist und über eine Dampfleitung mit der ersten Abteilung verbunden ist.

15. Anlage nach Anspruch 14, gekennzeichnet durch ein Fördersystem, das durch die drei Abteilungen des Druckbehälters (19) führt.

16. Anlage zur Durchführung des Verfahrens nach einem der Ansprüche 1 bis 10, mit Vorrichtungen zum Herstellen einer Maische aus Wasser, Kalziumsulfat-Dihydrat und Fasermaterial, mit einer Form- und Entwässerungsvorrichtung (10-11) und mit einem Druckbehälter (22) mit Dampfzuführung, dadurch gekennzeichnet, daß der Druckbehälter (22) drei aufeinanderfolgende, gegeneinander abdichtbare Abteilungen aufweist, daß die erste und die zweite Abteilung mit einer Heizung versehen sind, daß die letzte Abteilung einen Dampfablaß aufweist und über eine Dampfleitung mit der ersten Abteilung verbunden ist, und daß ein Doppelbandförderer (22.1), der am Eingang und Ausgang jeder Abteilung mit Dichtlippen (22.2) abgedichtet ist, durch die drei Abteilungen des Druckbehälters (22) geführt ist.

17. Anlage nach einem der Ansprüche 11 bis 16, dadurch gekennzeichnet, daß die Form- und Entwässerungsvorrichtung (10, 11) aus einer Saugentwässerungseinrichtung mit anschließender Druckentwässerungseinrichtung, insbesondere einem Walzgerüst mit Druckwalzen (11), besteht.

18. Anlage nach einem der Ansprüche 11 bis 16, dadurch gekennzeichnet, daß die Form- und Entwässerungsvorrichtung (10, 11) aus einer mehrstufigen Druckentwässerungseinrichtung, insbesondere aus einer oder mehreren Siebbandpressen, besteht.

**Claims**

1. Method for the production of boards from plaster and fibres, in which the boards are formed from a mash with calcium sulphate dihydrate and fibrous material with the addition of additives and the formed boards are heated in a pressure tank (12-14, 19, 22) in an atmosphere of saturated water vapour to 120-160 °C, preferably between 135-145 °C and then cooled again to approximately 100 °C or below, characterised in that for cooling the boards, the pressure in the pressure tank (12-14, 19, 22) is reduced by discharging water vapour and that the boards are clamped tightly between shaping members during cooling.

2. Method according to Claim 1, characterised in that the pressure reduction is carried out at less than 1 bar per minute.

3. Method according to Claim 1 or 2, characterised in that the surfaces of the boards are cooled during the pressure reduction.

4. Method according to one of Claims 1 to 3, characterised in that at least two pressure tanks (12-14) are charged alternately, the steam from one pressure tank (12-14) which is discharged for the purpose of cooling being fed to the next charged pressure tank (12-14).

5. Method according to one of Claims 1 to 4, characterised in that the formed boards are adjusted to a pH-value of less than/equal to 7, preferably between ph = 4 and pH = 5.

6. Method according to one of Claims 1 to 5, characterised by the use of calcium sulphate dihydrate with a Blaine number of between 1 000 and 3 500.

7. Method according to Claim 6, characterised in that at least 40 %, preferably more than 70 % of the calcium sulphate dihydrate has a Blaine number of less than 2 000.

8. Method according to one of Claims 1 to 7, characterised in that a cake is formed from the mash by suction drainage, which cake is then subject to pressure drainage.

9. Method according to one of Claims 1 to 7, characterised in that a cake is formed from the mash under pressure, which cake is then subject to further pressure drainage in several stages.

10. Method according to Claim 8 or 9, characterised in that before heating the formed boards have a moisture content of less than 40 % by weight, preferably approximately 35 % by weight.

11. Apparatus for carrying out the method according to one of Claims 1 to 10, with devices for producing a mash from water, calcium sulphate dihydrate and fibrous material, with a forming and drainage device (10, 11) and with a pressure tank (12-14, 19) with a steam supply, characterised by a stacking frame with horizontal, non-resilient and vertically movable intermediate plates and with means for fixing the vertical position of the intermediate plates.

12. Apparatus according to Claim 11, characterised by intermediate plates in the form of double plates, which with a steam-permeable frame are tightly connected to each other at a distance apart.

13. Apparatus according to Claim 11 or 12, characterised by three pressure tanks (12-14) connected in parallel, which are connected to each other by steam pipes.

14. Apparatus according to one of Claims 11 to 13, characterised by a pressure tank (19) with three successive compartments which can be sealed off with respect to each other, the first and second compartment being provided with a heating arrangement and the last compartment comprising a steam outlet and being connected by way of a steam pipe to the first compartment.

15. Apparatus according to Claim 14, characterised by a conveying system, which leads through the three compartments of the pressure tank (19).

16 Apparatus for carrying out the method according to one of Claims 1 to 10, with devices for producing a mash from water, calcium sulphate dihydrate and fibrous material, with a forming and draining device (10-11) and with a pressure tank (22) with a steam supply, characterised in that the pressure tank (22) comprises three successive compartments which can be sealed off with respect to each other, that the first and the second compartment are provided with a heating arrangement, that the last compartment comprising a steam outlet and is connected by way of a steam pipe to the first compartment and that a double belt conveyor (22.1), which is sealed with sealing lips (22.2) at the inlet and outlet of each compartment, is guided through the three compartments of the pressure tank (22).

17. Apparatus according to one of Claims 11 to 16, characterised in that the forming and drainage device (10, 11) consists of a suction drainage device with adjoining pressure drainage device, in particular a roll stand with pressure rollers (11).

18. Apparatus according to one of Claims 11 to 16, characterised in that the forming and drainage device (10, 11) consists of a multi-stage pressure drainage device, in particular of one or more screen belt presses.

**Revendications**

1. Procédé pour la fabrication de panneaux de matière fibreuse et de plâtre, où les panneaux sont formés à partir d'une trempe avec du sulfate de calcium dihydraté et de la matière fibreuse en y ajoutant des additifs et où les panneaux formés sont chauffés à 120-160 °C, de préférence entre 135-145 °C, dans un réservoir sous pression (12-14, 19, 22) où règne une atmosphère de vapeur d'eau saturée et où ils sont à nouveau refroidis jusqu'à peu près 100 °C ou moins, caractérisé en ce que, pour refroidir les panneaux on réduit la pression dans le réservoir sous pression (12-14, 19, 22) en faisant échapper de la vapeur d'eau et en ce que lors de leur refroidissement, les panneaux sont encastrés entre des éléments profilés.

2. Procédé suivant la revendication 1, caractérisé en ce que, la réduction de pression est réalisée à une cadence de moins d'un bar par minute.

3. Procédé suivant la revendication 1 ou 2, caractérisé en ce que, les surfaces des panneaux sont refroidies durant la réduction de la pression.

4. Procédé suivant l'une des revendications 1 à 3, caractérisé en ce que au moins deux réservoirs sous pression (12-14) sont chargés tour à tour, où la vapeur d'un réservoir sous pression (12-14) que l'on a laissé échapper pour le refroidir est conduit vers le réservoir sous pression (12-14) qui sera ensuite chargé.

5. Procédé suivant l'une des revendications 1 à 4, caractérisé en ce que les panneaux formés sont amenés à une valeur de pH inférieure ou égale à 7, de préférence entre pH = 4 et pH = 5.

6. Procédé suivant l'une des revendications 1 à 5, caractérisé en ce que, l'on utilise du sulfate de calcium dihydraté ayant entre 1 000 et 3 500 Blaine.

7. Procédé suivant la revendication 6, caractérisé en ce que, au moins 40 %, de préférence au delà de 70 %, du sulfate de calcium dihydraté est inférieur à 2 000 Blaine.

8. Procédé suivant l'une des revendications 1 à 7, caractérisé en ce que, on forme par un égouttage par succion une masse à partir de la trempe, ladite masse est ensuite soumise à un égouttage par pression.

9. Procédé suivant l'une des revendications 1 à 7, caractérisé en ce que on forme sous pression une masse à partir de la trempe, ladite masse étant ensuite égouttée en plusieurs étapes par pression.

10. Procédé suivant la revendication 8 ou 9, caractérisé en ce que, les panneaux formés ont une humidité de moins de 40 % en poids, de préférence à peu près 35 % en poids avant qu'ils soient chauffés.

11. Dispositif pour la mise en œuvre d'un procédé suivant l'une des revendications 1 à 10, avec un mécanisme pour préparer une trempe comportant de l'eau, du sulfate de calcium dihydraté et des matériaux fibreux, avec un ensemble de moulage et d'égouttage (10, 11) et un réservoir sous pression (12-14, 19) ayant une arrivée de vapeur, caractérisé en ce que, il comporte un tréteau d'empilement ayant des panneaux intermédiaires horizontaux rigides et pouvant être déplacés dans le sens vertical, et comportant également des moyens pour fixer la position verticale des panneaux intermédiaires.

12. Dispositif suivant la revendication 11, caractérisé en ce que, il comporte des panneaux intermédiaires ayant la forme de doubles panneaux, qui sont solidement reliés à distance les uns des autres à l'aide d'un cadre qui est perméable à la vapeur.

13. Dispositif suivant la revendication 11 ou 12, caractérisé en ce que, il comporte trois réservoirs sous pression (12-14) disposés en parallèle, lesdits réservoirs étant reliés les uns aux autres par des conduites de vapeur.

14. Dispositif suivant l'une des revendications 11 à 13, caractérisé en ce que, il comporte un réservoir sous pression (19) avec trois compartiments qui se suivent l'un l'autre et qui sont obturables l'un par rapport à l'autre, où le premier et le second compartiments sont pourvus d'un chauffage et où le dernier compartiment est pourvu d'un échappement pour la vapeur et est relié au premier compartiment par l'intermédiaire d'une conduite de vapeur.

15. Dispositif suivant la revendication 14, caractérisé en ce que, il comporte un système de transport qui s'étend à travers les trois compartiments du réservoir sous pression (19).

16. Dispositif pour la mise en œuvre du procédé suivant une des revendications 1 à 10, avec un mécanisme pour préparer une trempe comportant de l'eau, du sulfate de calcium dihydraté et des matériaux fibreux, avec un ensemble d'égouttage (10-11) et un réservoir sous pression (12-14, 19) ayant une arrivée de vapeur, caractérisé en ce que, le réservoir sous pression (22) comporte trois compartiments qui se suivent l'un l'autre et qui sont obturables l'un par rapport à l'autre, et en ce que le premier et le second compartiments sont pourvus d'un chauffage, que le dernier compartiment est pourvu d'un échappement pour la vapeur et est relié au premier compartiment à l'aide d'une conduite de vapeur, et en ce que des moyens de transport à double bande (22.1), qui sont scellés à l'aide de joint à lèvres à l'entrée et à la sortie de chaque compartiment, s'étendent à travers les trois compartiments du réservoir sous pression (21).

17. Dispositif suivant une des revendications 1 à 16, caractérisé en ce que, l'ensemble de moulage et d'égouttage (10, 11) est constitué d'un mécanisme d'égouttage par succion suivi par un mécanisme d'égouttage par pression, en particulier un rouleau compresseur (11).

18. Dispositif suivant une des revendications 1 à 16, caractérisé en ce que l'ensemble de moulage et d'égouttage (10, 11) est constitué d'un mécanisme d'égouttage par succion à plusieurs étages, en particulier une ou plusieurs bandes presseuses à tamis.

Fig. 1

23

23.1

23.2

18

17

1

2

3

4

8

9

10

11

7

6

5

15.1

12

15.2

16

13

14

0 166 094

Fig. 2

Fig. 3

0 166 094